(19) Europäisches Patentamt
European Patent Office
Office européen des brevets

(11) **EP 4 224 726 A1**

(12) **EUROPEAN PATENT APPLICATION**
published in accordance with Art. 153(4) EPC

(43) Date of publication:
**09.08.2023 Bulletin 2023/32**

(21) Application number: **21874978.6**

(22) Date of filing: **23.08.2021**

(51) International Patent Classification (IPC):
***H04B 5/02*** (2006.01)          ***H04B 1/59*** (2006.01)

(52) Cooperative Patent Classification (CPC):
**H04B 1/59; H04B 5/02**

(86) International application number:
**PCT/JP2021/030861**

(87) International publication number:
**WO 2022/070675 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.09.2020   JP 2020164027**

(71) Applicants:
• **Tokyo Institute of Technology
  Tokyo 152-8550 (JP)**
• **Kyocera Corporation
  Kyoto-shi Kyoto 612-8501 (JP)**

(72) Inventors:
• **ISHIHARA, Noboru
  Tokyo 152-8550 (JP)**
• **TSURU, Shinsuke
  Kyoto-shi, Kyoto 612-8501 (JP)**
• **YUZAWA, Tomonao
  Kyoto-shi, Kyoto 612-8501 (JP)**
• **ISOYAMA, Shinji
  Kyoto-shi, Kyoto 612-8501 (JP)**

(74) Representative: **Viering, Jentschura & Partner
mbB**
**Patent- und Rechtsanwälte
Am Brauhaus 8
01099 Dresden (DE)**

(54) **MULTIPLEXING CIRCUIT**

(57)     A combiner circuit includes a transmission circuit 28 to be connected to an antenna, and a control circuit 29 configured to control impedance of the transmission circuit 28. The transmission circuit 28 includes multiple impedance circuits 110, 120 having different impedances from each other, and multiple switch elements SWL1 to SWL8, and SWC1 to SWC8, each of which is connected to a corresponding one of the multiple impedance circuits 110, 120. The control circuit 29 includes multiple comparators CM1 to CM16, each of which is connected to a corresponding one of the multiple switch elements SWL1 to SWL8, and SWC1 to SWC8, and a voltage divider circuit including multiple resistive elements R1 to R9, and R10 to R18, each of which is configured to divide an input reference voltage and output a divided voltage power to a corresponding one of the multiple comparators CM1 to CM16.

FIG. 4

EP 4 224 726 A1

## Description

### TECHNICAL FIELD

The present disclosure relates to a combiner circuit.

### BACKGROUND OF INVENTION

A backscatter system is known as a data communication method for wireless communication devices. For example, Patent Document 1 discloses a technique to achieve a single sideband by suppressing either an upper sideband (USB) signal or a lower sideband (LSB) signal using a demultiplexer/multiplexer.

### CITATION LIST

### PATENT LITERATURE

Patent Document 1: JP 2005-323223 A

### SUMMARY

### PROBLEM TO BE SOLVED

Radio frequency identification (RFID) systems for performing backscatter data communication require smaller wireless communication devices. However, in Patent Document 1, the demultiplexer/multiplexer is used to achieve the single sideband. The demultiplexer/multiplexer is disadvantageous for reducing the size of the wireless communication device.

The present disclosure provides a combiner circuit capable of reducing the size of a backscatter wireless communication device.

### SOLUTION TO PROBLEM

In an aspect of the present disclosure, a combiner circuit is a combiner circuit including a transmission circuit connected to an antenna and a control circuit configured to control impedance of the transmission circuit, in which the transmission circuit includes multiple impedance circuits, the multiple impedance circuits having different impedances from each other, and multiple first switch elements, each of the multiple first switch elements connected to a corresponding one of the multiple impedance circuits, and the control circuit includes multiple comparators, each of the multiple comparators connected to a corresponding one of the multiple first switch elements and a voltage divider circuit including multiple resistive elements, each of the multiple resistive elements configured to divide an input reference voltage and output a divided voltage power to a corresponding one of the multiple comparators.

### ADVANTAGEOUS EFFECT

According to the present disclosure, a single sideband backscatter wireless communication device can be reduced in size.

### BRIEF DESCRIPTION OF THE DRAWINGS

FIG. 1 is a block diagram illustrating an example of a configuration of a wireless communication device according to an embodiment.
FIG. 2 is a diagram for explaining a method of controlling rotation of impedance in a complex plane according to the embodiment.
FIG. 3A is a diagram for explaining changes in a backscatter signal.
FIG. 3B is a diagram for explaining changes in a backscatter signal.
FIG. 3C is a diagram for explaining changes in a backscatter signal.
FIG. 4 is a diagram for explaining a method of controlling impedance of a transmission circuit according to the embodiment.
FIG. 5 is a diagram for explaining a position of the impedance of the transmission circuit in a complex plane according to the embodiment.
FIG. 6A is a diagram illustrating an example of an input signal.
FIG. 6B is a diagram illustrating an example of an input signal.
FIG. 7 is a diagram illustrating an example of a spectrum waveform of a backscatter signal.
FIG. 8 is a diagram illustrating an example of a spectrum waveform of a backscatter signal.

### DESCRIPTION OF EMBODIMENTS

Hereinafter, an embodiment of the present disclosure will now be described in detail with reference to the accompanying drawings. Note that the present disclosure is not limited by this embodiment, and when there is more than one embodiment, the present disclosure includes combinations of the individual embodiments. In the following embodiments, the same reference signs are assigned to the same portions and redundant descriptions thereof will be omitted.

Embodiment

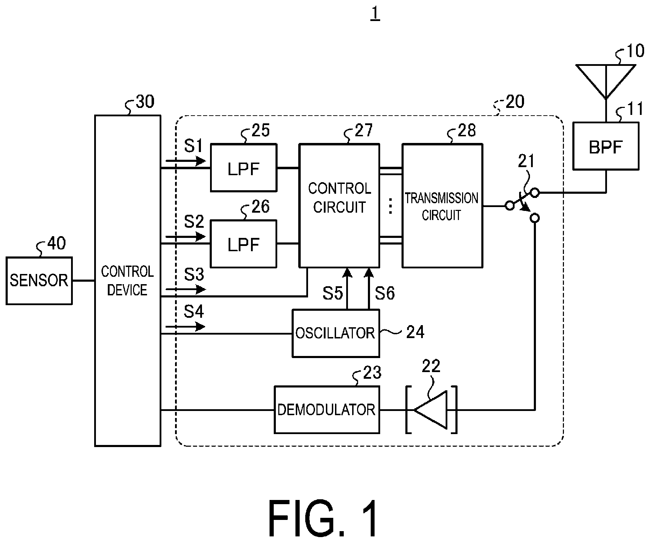

A configuration of a wireless communication device according to the embodiment will be described with reference to FIG. 1. FIG. 1 is a block diagram illustrating an example of a configuration of the wireless communication device according to the embodiment.

As illustrated in FIG. 1, a wireless communication device 1 includes an antenna 10, a band-pass filter (BPF) 11, a radio frequency backscatter (RFBS) device 20, a control device 30, and a sensor 40. The wireless communication device 1 is a communication device that performs backscatter wireless communication such as RFID.

The antenna 10 receives signals transmitted to the wireless communication device 1. The antenna 10 transmits radio waves towards the outside of the wireless communication device 1. The BPF 11 is a filter that passes signals in a desired frequency band.

The RFBS device 20 includes a radio frequency switch 21, an amplifier 22, a demodulator 23, an oscillator 24, a low-pass filter (LPF) 25, an LPF 26, a control circuit 27, and a transmission circuit 28. The RFBS device 20 is a wireless communication device that supports backscatter data communication. The backscatter data communication utilizes reflection of transmitted radio waves to perform communication.

The radio frequency switch 21 switches connection between the antenna 10 and a transmission circuit system or a receiving circuit system. The radio frequency switch 21 can connect the transmission circuit system to the antenna 10. The wireless communication device 1 transmits signals when the antenna 10 and the transmission circuit system are connected. The radio frequency switch 21 can connect the receiving circuit system to the antenna 10. The transmission circuit system includes the oscillator 24, the LPF 25, the LPF 26, the control circuit 27, and the transmission circuit 28. The receiving circuit system includes the amplifier 22 and the demodulator 23.

The amplifier 22 amplifies and outputs a signal received from the antenna 10. The amplifier 22 outputs the amplified signal to the demodulator 23. The demodulator 23 performs a demodulation process on the input signal. The demodulator 23 demodulates the signal received from the amplifier 22. For example, the demodulator 23 performs the demodulation process on the signal received from the amplifier 22 (a modulated signal such as amplitude shift keying (ASK)).

In the control device 30, for example, a program stored inside is executed by a processor or the like, using a random access memory (RAM) or the like as a work area. The control device 30 can be a controller. The control device 30 may be implemented with an integrated circuit such as an application specific integrated circuit (ASIC) or a field programmable gate array (FPGA). The control device 30 may be implemented with a combination of software and hardware.

The control device 30 outputs serial data S1 based on output data from the sensor 40 to the control circuit 27 via the LPF 25. The control device 30 outputs serial data S2 based on output data from the sensor 40 to the control circuit 27 via the LPF 26. Phases of the serial data S1 and the serial data S2 differ by approximately 90°.

The control device 30 outputs a control signal S3 to the control circuit 27 for suppressing either a USB signal or an LSB signal relative to the carrier signal. The control device 30 outputs to the oscillator 24 a control signal S4 for controlling a channel used for communication.

The sensor 40 detects various physical quantities. The physical quantities detected by the sensor 40 are not limited to any specific physical quantities. The sensor 40 can include, for example, a temperature sensor that detects a temperature around the wireless communication device 1 and/or an acceleration sensor that detects acceleration occurring in the wireless communication device 1. The sensor 40 may include other sensors.

The oscillator 24 generates an oscillation signal with a predetermined frequency. The oscillator 24 is configured to generate an oscillation signal S5 according to the control signal S4. The oscillator 24 is configured to generate an oscillation signal S6 having a phase 90° different from that of the oscillating signal S5.

The control circuit 27 controls the transmission circuit 28. The control circuit 27 controls an impedance value of the transmission circuit 28 based on the serial data S1, the serial data S2, and the control signal S3. The control circuit 27 changes the impedance of the transmission circuit 28. Due to the change in impedance, a reflection coefficient of an output terminal on the antenna 10 side rotates in the complex plane. The control circuit 27 changes the impedance of the transmission circuit 28 to control the reflection coefficient of the output terminal so as to rotate in the complex plane. For example, the control circuit 27 controls the impedance of the transmission circuit 28 so as to reduce the USB signal or LSB signal relative to the carrier signal in the reflected signal (hereinafter also referred to as a backscatter signal), to realize a single sideband.

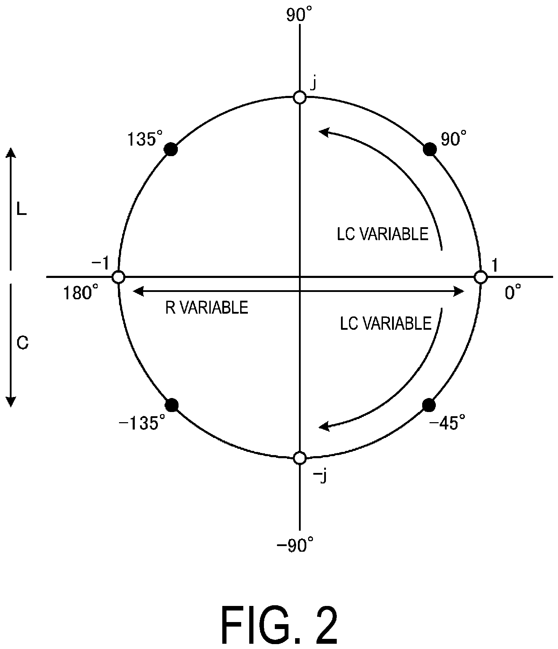

A method of controlling the reflection coefficient of the output terminal of the transmission circuit 28 on the antenna 10 side by using a polar chart (polar coordinates) in FIG. 2 so as to rotate on the complex plane of the polar chart by the control circuit 27 will be described. FIG. 2 is a diagram for explaining how the control circuit 27 changes the impedance of the transmission circuit 28 and controls the reflection coefficient of the output terminal so as to rotate.

FIG. 2 is a diagram illustrating changes in a reflection coefficient Γ due to changes in impedance on the polar chart. The impedance is calculated by the following equation (1). In equation (1), Z is impedance, R is resistance, j is imaginary number, ω is angular frequency, L is inductance, and C is capacitance.

$$Z = R + j(\omega L - 1/\omega C) \qquad (1)$$

The reflection coefficient Γ is represented by the following equation.

$$\Gamma = (Z - Z_0)/(Z + Z_0) \qquad (2)$$

Here, $Z_0$ is an impedance of the antenna 10 or the BPF 11.

The control circuit 27 selectively controls the impedance Z so that the reflection coefficient $\Gamma$ rotates around a reference point. The reference point may be, but is not limited to, the origin and may be any point. In the transmission circuit, the closer the reference point is to the origin, the more ideal the signal will be. In the transmission circuit, the closer the rotation of the reflection coefficient $\Gamma$ around the reference point is controlled to a circle, the more ideal the signal will be. In the Smith chart, a lower semicircular region indicates capacitive properties, and an upper half indicates inductive properties. A change on the real axis represents a change in a resistance value.

The transmission circuit 28 includes multiple impedances. The control circuit 27 can selectively control each of the multiple impedances. For example, the control circuit 27 controls the impedance of the transmission circuit 28 in 45° increments at 0°, 45°, 90°, 135°, 180°, -135°, -90°, and -45°. The control circuit 27 controls the voltage reflection coefficient $\Gamma$ by controlling the impedance. The control circuit 27 can control the impedance to rotate discretely by sequentially changing the impedance of the transmission circuit 28. The control circuit 27 discretely rotates the reflection coefficient $\Gamma$ by discretely rotating the impedance.

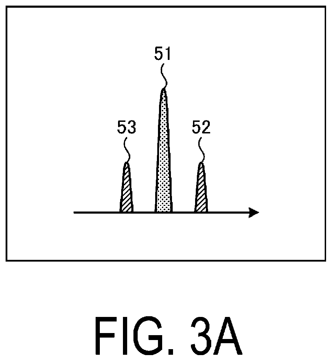

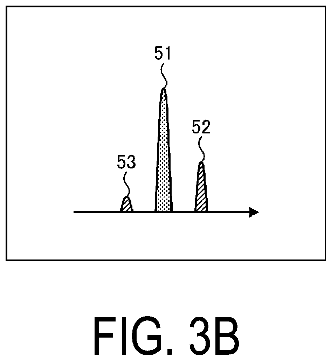

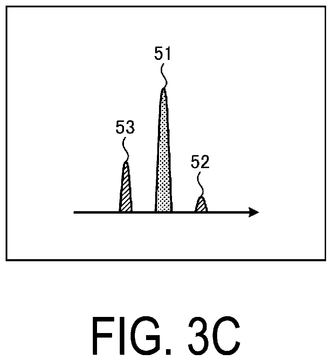

The control circuit 27 can change the impedance counterclockwise according to the order of changing the impedance of the transmission circuit 28. The control circuit 27 can change the reflection coefficient $\Gamma$ counterclockwise by rotating the impedance counterclockwise. When the reflection coefficient is controlled to rotate counterclockwise, the reflected signal for the radio frequency (RF) is only the upper sideband (USB) signal. When the reflection coefficient is controlled to rotate clockwise, only the low sideband (LSB) signal is obtained. At that time, the frequency of the reflected signal is detuned from the RF signal frequency by a rotational speed frequency. FIGs. 3A, 3B, and 3C are used to explain several examples of changes in the backscatter signal by changing the impedance to control the reflection coefficient.

FIG. 3A is a diagram illustrating a frequency spectrum for explaining a state of a backscatter signal when the control circuit 27 controls only the resistive component of the impedance to change the reflection coefficient $\Gamma$ on the real axis of the polar chart (FIG. 2). The horizontal axis represents the frequency, and the vertical axis represents the intensity of the RF signal and the reflected signal. FIG. 3A illustrates a carrier signal 51, a USB signal 52, and an LSB signal 53. When the resistive component is controlled, the reflection coefficient $\Gamma$ is controlled to be either 0° or 180° on the real axis. When the reflection coefficient $\Gamma$ is controlled by changing the impedance only with the resistive component, as illustrated in FIG. 3A, for example, when switching from 0° to 180°, the clockwise signal component and the counterclockwise signal component are included. The inclusion of signal components in the two rotational directions causes the USB signal 52 and the LSB signal 53 to appear simultaneously and selective suppressing of only one of the signals is not possible. As a result, the SSB signal cannot be obtained by controlling only the resistive component.

FIG. 3B is a diagram illustrating a frequency spectrum for explaining changes in a backscatter signal when the control circuit 27 changes the inductance or capacitance of the impedance so that the locus of the reflection coefficient $\Gamma$ is circular. The horizontal axis represents the frequency, and the vertical axis represents the intensity of the RF signal and the reflected signal. Based on equations (1) and (2), the control circuit 27 can control the impedance to rotate counterclockwise by controlling the value of the inductance. At this time, the impedance is rotated counterclockwise, for example, from 0° to 45°, 90°, and 135°. The control circuit 27 can further control the impedance to rotate counterclockwise by controlling the value of the capacitance. At this time, the impedance is rotated counterclockwise, for example, from 180° to -135°, -90°, and -45°. As illustrated in FIG. 3B, the control circuit 27 can reflect the transmitted RF signal while suppressing the LSB signal 53 by controlling the impedance to rotate counterclockwise. In other words, the control circuit 27 can obtain a backscatter signal in which the USB signal 52 is selected as the SSB signal by controlling the impedance to rotate counterclockwise.

FIG. 3C is a diagram for explaining changes in a backscatter signal when the control circuit 27 changes the capacitance or inductance of the impedance so that the locus of the reflection coefficient $\Gamma$ is circular. Based on equations (1) and (2), the control circuit 27 can control the impedance to rotate clockwise by controlling the value of the capacitance. At this time, the impedance is rotated clockwise, for example, from 0° to -45°, -90°, and -135°. The control circuit 27 can further control the impedance to rotate clockwise by controlling the value of the inductance. At this time, the impedance is rotated clockwise, for example, from 180° to, 135°, 90°, and 45°. As illustrated in FIG. 3C, the control circuit 27 can reflect the transmitted RF signal while suppressing the USB signal 52 by controlling the impedance to rotate clockwise. In other words, the control circuit 27 can obtain a backscatter signal in which the LSB signal 53 is selected as the SSB signal by controlling the impedance to rotate clockwise.

The transmission circuit 28 is disposed at a front end of the wireless communication device 1. The transmission circuit 28 is a circuit that performs backscatter communication in which the transmitted radio waves are reflected as backscatter signals. The transmission circuit 28 is connected to the antenna 10. The transmission circuit 28 includes multiple impedance circuits, each of which has a different impedance. Each of the multiple impedance circuits includes a switch element. The switch element switches connection of the corresponding impedance circuit. The control circuit 27 switches connection of each of the multiple impedance circuits by controlling each of the multiple switch elements. The control circuit 27 controls the impedance of the transmission circuit 28 by controlling the multiple switch elements.

Impedance Controlling Method

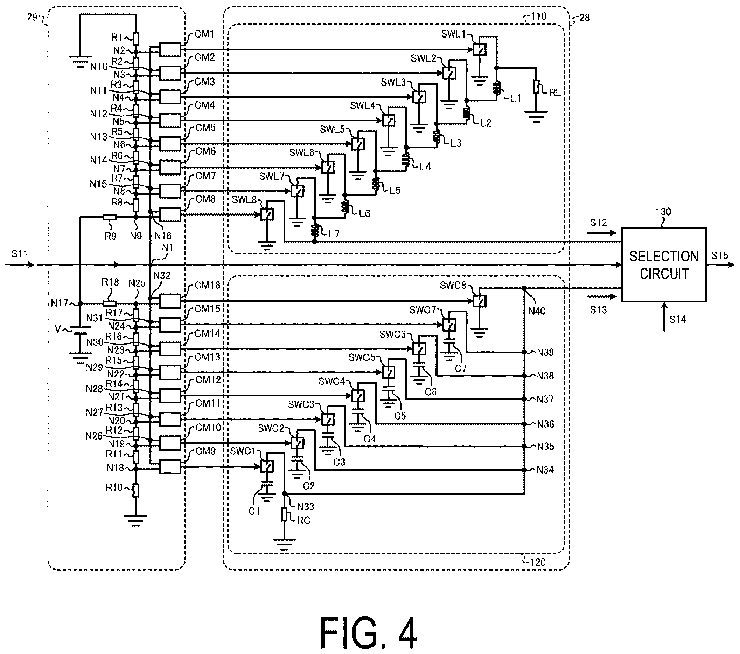

A method of controlling the impedance of the transmission circuit according to the embodiment will be described with reference to FIG. 4. FIG. 4 is a diagram for explaining the method of controlling the impedance of the transmission circuit according to the embodiment. The control circuit 27 receives an input signal in accordance with transmission data to be transmitted to an external device. The control circuit 27 outputs a control signal for controlling the impedance of the transmission circuit 28 in response to the control signal.

FIG. 4 illustrates a configuration of a drive control circuit 29 corresponding to an output unit of the control circuit 27 in FIG. 1, and the transmission circuit 28. The drive control circuit 29 is a drive control circuit for the transmission circuit 28 that switches the impedance and controls the reflection coefficient Γ to rotate on the complex plane. The control circuit 27 (drive control circuit 29) and the transmission circuit 28 can also be referred to as a combiner circuit.

As illustrated in FIG. 4, the drive control circuit 29 includes a reference power supply V, a resistive element R1, a resistive element R2, a resistive element R3, a resistive element R4, a resistive element R5, a resistive element R6, a resistive element R7, a resistive element R8, a resistive element R9, a resistive element R10, a resistive element R11, a resistive element R12, a resistive element R13, a resistive element R14, a resistive element R15, a resistive element R16, a resistive element R17, and a resistive element R18. The drive control circuit 29 further includes a comparator CM1, a comparator CM2, a comparator CM3, a comparator CM4, a comparator CM5, a comparator CM6, a comparator CM7, a comparator CM8, a comparator CM9, a comparator CM10, a comparator CM11, a comparator CM12, a comparator CM13, a comparator CM14, a comparator CM15, and a comparator CM16.

The transmission circuit 28 includes an inductor circuit 110 and a capacitor circuit 120. The inductor circuit 110 and the capacitor circuit 120 are impedance circuits.

The resistive elements R1 to R9 are connected in series with each other. The resistive element R1 is connected to a reference potential. The resistive element R9 is connected to the reference power supply V. The resistive elements R1 to R9 and the comparators CM1 to CM8 constitute a voltage divider circuit that outputs control signals to the inductor circuit 110.

A node N1 is a node to which an input signal S11 is input. A node N2 is a node between the resistive element R1 and the resistive element R2. A node N3 is a node between the resistive element R2 and the resistive element R3. A node N4 is a node between the resistive element R3 and the resistive element R4. A node N5 is a node between the resistive element R4 and the resistive element R5. A node N6 is a node between the resistive element R5 and the resistive element R6. A node N7 is a node between the resistive element R6 and the resistive element R7. A node N8 is a node between the resistive element R7 and the resistive element R8. A node N9 is a node between the resistive element R8 and the resistive element R9. Nodes N10 to N16 are each electrically connected to the node N1. From the node N1, a reference signal corresponding to a voltage value of the input signal S11 can be output. From the nodes N2 to 9, divided voltages corresponding to the voltage value of the reference power supply V and the resistance values of the resistive elements R1 to R9 can be output as output signals.

The node N1 is electrically connected to one input terminal of the comparator CM1. The node N2 is electrically connected to the other input terminal of the comparator CM1. An output terminal of the comparator CM1 is electrically connected to a switch element SWL1 of the inductor circuit 110. The comparator CM1 compares the input signal S11 input from the node N1 and a first divided voltage as a control signal input from the node N2, and outputs a switch control signal according to the comparison result. For example, the comparator CM1 outputs a switch control signal to close the switch element SWL1 when the first divided voltage is greater than the input signal S11. The comparator CM1 outputs a switch control signal to open the switch element SWL1 when the first divided voltage is smaller than the input signal S11.

The node N10 is electrically connected to one input terminal of the comparator CM2. The node N3 is electrically connected to the other input terminal of the comparator CM2. An output terminal of the comparator CM2 is electrically connected to a switch element SWL2 of the inductor circuit 110. The comparator CM2 compares the input signal S11 input from the node N10 and a second divided voltage as a control signal input from the node N3, and outputs a switch control signal according to the comparison result. For example, the comparator CM2 outputs a switch control signal to close the switch element SWL2 when the second divided voltage is greater than the input signal S11. The comparator CM2 outputs a switch control signal to open the switch element SWL2 when the second divided voltage is smaller than the input signal S11.

The node N11 is electrically connected to one input terminal of the comparator CM3. The node N4 is electrically connected to the other input terminal of the comparator CM3. An output terminal of the comparator CM3 is electrically connected to a switch element SWL3 of the inductor circuit 110. The comparator CM3 compares the input signal S11 input from the node N11 and a third divided voltage as a control signal input from the node N4, and outputs a switch control signal according to the comparison result. For example, the comparator CM3 outputs a switch control signal to close the switch element SWL3 when the third divided voltage is greater than the input signal S11. The comparator CM3 outputs a switch control signal to open the switch element SWL3 when the third divided voltage is smaller than the input signal S11.

The node N12 is electrically connected to one input terminal of the comparator CM4. The node N5 is electrically connected to the other input terminal of the comparator CM4. An output terminal of the comparator CM4 is electrically connected to a switch element SWL4 of the inductor circuit 110. The comparator CM4 compares the input signal S11 input from the node N12 and a fourth divided voltage as a control signal input from the node N5, and outputs a switch control signal according to the comparison result. For example, the comparator CM4 outputs a switch control signal to close the switch element SWL4 when the fourth divided voltage is greater than the input signal S11. The comparator CM4 outputs a switch control signal to open the switch element SWL4 when the fourth divided voltage is smaller than the input signal S11.

The node N13 is electrically connected to one input terminal of the comparator CM5. The node N6 is electrically connected to the other input terminal of the comparator CM5. An output terminal of the comparator CM5 is electrically connected to a switch element SWL5 of the inductor circuit 110. The comparator CM5 compares the input signal S11 input from the node N13 and a fifth divided voltage as a control signal input from the node N6, and outputs a switch control signal according to the comparison result. For example, the comparator CM5 outputs a switch control signal to close the switch element SWL5 when the fifth divided voltage is greater than the input signal S11. The comparator CM5 outputs a switch control signal to open the switch element SWL5 when the fifth divided voltage is smaller than the input signal S11.

The node N14 is electrically connected to one input terminal of the comparator CM6. The node N7 is electrically connected to the other input terminal of the comparator CM6. An output terminal of the comparator CM6 is electrically connected to a switch element SWL6 of the inductor circuit 110. The comparator CM6 compares the input signal S11 input from the node N14 and a sixth divided voltage as a control signal input from the node N7, and outputs a switch control signal according to the comparison result. For example, the comparator CM6 outputs a switch control signal to close the switch element SWL6 when the sixth divided voltage is greater than the input signal S11. The comparator CM6 outputs a switch control signal to open the switch element SWL6 when the sixth divided voltage is smaller than the input signal S11.

The node N15 is electrically connected to one input terminal of the comparator CM7. The node N8 is electrically connected to the other input terminal of the comparator CM7. An output terminal of the comparator CM7 is electrically connected to a switch element SWL7 of the inductor circuit 110. The comparator CM7 compares the input signal S11 input from the node N15 and a seventh divided voltage as a control signal input from the node N8, and outputs a switch control signal according to the comparison result. For example, the comparator CM7 outputs a switch control signal to close the switch element SWL7 when the seventh divided voltage is greater than the input signal S11. The comparator CM7 outputs a switch control signal to open the switch element SWL7 when the seventh divided voltage is smaller than the input signal S11.

The node N16 is electrically connected to one input terminal of the comparator CM8. The node N9 is electrically connected to the other input terminal of the comparator CM8. An output terminal of the comparator CM8 is electrically connected to a switch element SWL8 of the inductor circuit 110. The comparator CM8 compares the input signal S11 input from the node N16 and an eighth divided voltage as a control signal input from the node N9, and outputs a switch control signal according to the comparison result. For example, the comparator CM8 outputs a switch control signal to close the switch element SWL7 when the eighth divided voltage is greater than the input signal S11. The comparator CM8 outputs a switch control signal to open the switch element SWL8 when the eighth divided voltage is smaller than the input signal S11.

The resistive elements R10 to R18 are connected in series with each other. The resistive elements R1 to R9 and the resistive elements R10 to R18 are connected in parallel. The resistive element R10 is connected to the reference potential. The resistive element R18 is connected to the reference power supply V via a node N17. The resistive elements R10 to R18 and the comparators CM9 to CM16 constitute a voltage divider circuit that outputs control signals to the capacitor circuit 120.

A node N18 is a node between the resistive element R10 and the resistive element R11. A node N19 is a node between the resistive element R11 and the resistive element R12. A node N20 is a node between the resistive element R12 and the resistive element R13. A node N21 is a node between the resistive element R13 and the resistive element R14. A node N22 is a node between the resistive element R14 and the resistive element R15. A node N23 is a node between the resistive element R15 and the resistive element R16. A node N24 is a node between the resistive element R16 and the resistive element R17. A node N25 is a node between the resistive element R17 and the resistive element R18. Nodes N26 to N32 are each electrically connected to the node N1. From the nodes N26 to N32, divided voltages corresponding to the voltage value of the reference power supply V and the resistance values of the resistive elements R10 to R18 can be output as output voltages.

The node N1 is electrically connected to one input terminal of the comparator CM9. The node N18 is electrically connected to the other input terminal of the comparator CM9. An output terminal of the comparator CM9 is electrically connected to a switch element SWC 1 of the capacitor circuit 120. The comparator CM9 compares the input signal S11 input from the node N1 and a ninth divided voltage as a control signal input from the node N18, and outputs a switch control signal according to the comparison result. For example, the comparator CM9 outputs a switch control signal to close the switch element SWC1 when the ninth divided voltage is greater than the input signal S11. The comparator CM9 outputs a switch control signal to open the switch element SWC1 when the ninth divided voltage is smaller than the input signal S11.

The node N26 is electrically connected to one input terminal of the comparator CM10. The node N19 is electrically connected to the other input terminal of the comparator CM10. An output terminal of the comparator CM10 is electrically connected to a switch element SWC2 of the capacitor circuit 120. The comparator CM10 compares the input signal S11 input from the node N26 and a 10th divided voltage as a control signal input from the node N19, and outputs a switch control signal according to the comparison result. For example, the comparator CM10 outputs a switch control signal to close the switch element SWC2 when the 10th divided voltage is greater than the input signal S11. The comparator CM10 outputs a switch control signal to open the switch element SWC2 when the 10th divided voltage is smaller than the input signal S11.

The node N27 is electrically connected to one input terminal of the comparator CM11. The node N20 is electrically connected to the other input terminal of the comparator CM11. An output terminal of the comparator CM11 is electrically connected to a switch element SWC3 of the capacitor circuit 120. The comparator CM11 compares the input signal S11 input from the node N27 and an 11th divided voltage as a control signal input from the node N20, and outputs a switch control signal according to the comparison result. For example, the comparator CM11 outputs a switch control signal to close the switch element SWC3 when the 11th divided voltage is greater than the input signal S11. The comparator CM11 outputs a switch control signal to open the switch element SWC3 when the 11th divided voltage is smaller than the input signal S11.

The node N28 is electrically connected to one input terminal of the comparator CM12. The node N21 is electrically connected to the other input terminal of the comparator CM12. An output terminal of the comparator CM12 is electrically connected to a switch element SWC4 of the capacitor circuit 120. The comparator CM12 compares the input signal S11 input from the node N28 and a 12th divided voltage as a control signal input from the node N21, and outputs a switch control signal according to the comparison result. For example, the comparator CM12 outputs a switch control signal to close the switch element SWC4 when the 12th divided voltage is greater than the input signal S11. The comparator CM12 outputs a switch control signal to open the switch element SWC4 when the 12th divided voltage is smaller than the input signal S11.

The node N29 is electrically connected to one input terminal of the comparator CM13. The node N22 is electrically connected to the other input terminal of the comparator CM13. An output terminal of the comparator CM13 is electrically connected to a switch element SWC5 of the capacitor circuit 120. The comparator CM13 compares the input signal S11 input from the node N29 and a 13th divided voltage as a control signal input from the node N22, and outputs a switch control signal according to the comparison result. For example, the comparator CM13 outputs a switch control signal to close the switch element SWC5 when the 13th divided voltage is greater than the input signal S11. The comparator CM13 outputs a switch control signal to open the switch element SWC5 when the 13th divided voltage is smaller than the input signal S11.

The node N30 is electrically connected to one input terminal of the comparator CM14. The node N23 is electrically connected to the other input terminal of the comparator CM14. An output terminal of the comparator CM14 is electrically connected to a switch element SWC6 of the capacitor circuit 120. The comparator CM14 compares the input signal S11 input from the node N30 and a 14th divided voltage as a control signal input from the node N23, and outputs a switch control signal according to the comparison result. For example, the comparator CM14 outputs a switch control signal to close the switch element SWC6 when the 14th divided voltage is greater than the input signal S11. The comparator CM14 outputs a switch control signal to open the switch element SWC6 when the 14th divided voltage is smaller than the input signal S11.

The node N31 is electrically connected to one input terminal of the comparator CM15. The node N24 is electrically connected to the other input terminal of the comparator CM15. An output terminal of the comparator CM15 is electrically connected to a switch element SWC7 of the capacitor circuit 120. The comparator CM15 compares the input signal S11 input from the node N31 and a 15th divided voltage as a control signal input from the node N24, and outputs a switch control signal according to the comparison result. For example, the comparator CM15 outputs a switch control signal to close the switch element SWC7 when the 15th divided voltage is greater than the input signal S11. The comparator CM15 outputs a switch control signal to open the switch element SWC7 when the 15th divided voltage is smaller than the input signal S11.

The node N32 is electrically connected to one input terminal of the comparator CM16. The node N25 is electrically connected to the other input terminal of the comparator CM16. An output terminal of the comparator CM16 is electrically connected to a switch element SWC8 of the capacitor circuit 120. The comparator CM16 compares the input signal S11 input from the node N32 and a 16th divided voltage as a control signal input from the node N25, and outputs a switch control signal according to the comparison result. For example, the comparator CM16 outputs a switch control signal to close the switch element SWC8 when the 16th divided voltage is greater than the input signal S11. The comparator CM16 outputs a switch control signal to open the switch element SWC8 when the 16th divided voltage is smaller than the input signal S11.

A configuration of the inductor circuit 110 will be described. The inductor circuit 110 includes the switch element SWL1, the switch element SWL2, the switch element SWL3, the switch element SWL4, the switch element SWL5, the switch element SWL6, the switch element SWL7, the switch element SWL8, an inductor L1, an inductor L2, an inductor L3, an inductor L4, an inductor L5, an inductor L6, an inductor L7, and a highly resistive element RL.

An input terminal of the switch element SWL1 is electrically connected to the output terminal of the comparator CM1. One end of an output terminal of the switch element SWL1 is electrically connected to the reference potential via one end of the inductor L1 and the highly resistive element RL. The other end of the output terminal of the switch element SWL1 is connected to the reference potential. The other end of the inductor L1 is electrically connected to a selection circuit 130 via the inductors L2 to L7. The switch element SWL1 electrically connects the inductor L1 and the selection circuit 130 when the switch element SWL1 is closed. The switch element SWL1 electrically separates the inductor L1 and the selection circuit 130 when the switch element SWL1 is open. When the switch element SWL1 is closed, the impedance of the inductor circuit 110 is the sum of the inductances of the inductors L1 to L7.

An input terminal of the switch element SWL2 is electrically connected to an output terminal of the comparator CM2. One end of an output terminal of the switch element SWL2 is electrically connected to the other end of the inductor L1 and one end of the inductor L2. The other end of the output terminal of the switch element SWL2 is connected to the reference potential. The other end of the inductor L2 is electrically connected to the selection circuit 130 via the inductors L3 to L7. The switch element SWL2 electrically connects the inductor L2 and the selection circuit 130 when the switch element SWL2 is closed. The switch element SWL2 electrically separates the inductor L2 and the selection circuit 130 when the switch element SWL2 is open. That is, the inductance of the inductor L2 is subtracted from the impedance of the inductor circuit 110 when the switch element SWL2 is closed.

An input terminal of the switch element SWL3 is electrically connected to an output terminal of the comparator CM3. One end of an output terminal of the switch element SWL3 is electrically connected to the other end of the inductor L2 and one end of the inductor L3. The other end of the output terminal of the switch element SWL3 is connected to the reference potential. The other end of the inductor L3 is electrically connected to the selection circuit 130 via the inductors L4 to L7. The switch element SWL3 electrically connects the inductor L3 and the selection circuit 130 when the switch element SWL3 is closed. The switch element SWL3 electrically separates the inductor L3 and the selection circuit 130 when the switch element SWL3 is open. That is, the inductance of the inductor L3 is subtracted from the impedance of the inductor circuit 110 when the switch element SWL3 is closed.

An input terminal of the switch element SWL4 is electrically connected to an output terminal of the comparator CM4. One end of an output terminal of the switch element SWL4 is electrically connected to the other end of the inductor L3 and one end of the inductor L4. The other end of the output terminal of the switch element SWL4 is connected to the reference potential. The other end of the inductor L4 is electrically connected to the selection circuit 130 via the inductors L5 to L7. The switch element SWL4 electrically connects the inductor L4 and the selection circuit 130 when the switch element SWL4 is closed. The switch element SWL4 electrically separates the inductor L4 and the selection circuit 130 when the switch element SWL4 is open. That is, the inductance of the inductor L4 is subtracted from the impedance of the inductor circuit 110 when the switch element SWL4 is closed.

An input terminal of the switch element SWL5 is electrically connected to an output terminal of the comparator CM5. One end of an output terminal of the switch element SWL5 is electrically connected to the other end of the inductor L4 and one end of the inductor L5. The other end of the output terminal of the switch element SWL5 is connected to the reference potential. The other end of the inductor L5 is electrically connected to the selection circuit 130 via the inductors L6 and L7. The switch element SWL5 electrically connects the inductor L5 and the selection circuit 130 when the switch element SWL5 is closed. The switch element SWL5 electrically separates the inductor L5 and the selection circuit 130 when the switch element SWL5 is open. That is, the inductance of the inductor L5 is subtracted from the impedance of the inductor circuit 110 when the switch element SWL5 is closed.

An input terminal of the switch element SWL6 is electrically connected to an output terminal of the comparator CM6. One end of an output terminal of the switch element SWL6 is electrically connected to the other end of the inductor L5 and one end of the inductor L6. The other end of the output terminal of the switch element SWL6 is connected to the reference potential. The other end of the inductor L6 is electrically connected to the selection circuit 130 via the inductor L7. The switch element SWL6 electrically connects the inductor L6 and the selection circuit 130 when the switch element SWL6 is closed. The switch element SWL6 electrically separates the inductor L6 and the selection circuit 130 when the switch element SWL6 is open. That is, the inductance of the inductor L6 is subtracted from the impedance of the inductor circuit 110 when the switch element SWL6 is closed.

An input terminal of the switch element SWL7 is electrically connected to an output terminal of the comparator CM7. One end of an output terminal of the switch element SWL7 is electrically connected to the other end of the inductor L6 and one end of the inductor L7. The other end of the output terminal of the switch element SWL7 is connected to the reference potential. The other end of the inductor L7 is electrically connected to the selection circuit 130. The switch element SWL7 electrically connects the inductor L7 and the selection circuit 130 when the switch element SWL7 is closed. The switch element SWL7 electrically separates the inductor L7 and the selection circuit 130 when the switch element SWL7 is open. That is, the inductance of the inductor L7 is subtracted from the impedance of the inductor circuit 110 when the switch element SWL7 is closed.

An input terminal of the switch element SWL8 is electrically connected to an output terminal of the comparator CM8. One end of an output terminal of the switch element SWL8 is electrically connected to the other end of the inductor L7 and the selection circuit 130. The other end of the output terminal of the switch element SWL8 is connected to the reference potential. The switch element SWL8 is electrically connected to the selection circuit 130 when the switch element SWL8 is closed. The switch element SWL2 is electrically separated from the selection circuit 130 when the switch element SWL2 is open.

In the inductor circuit 110, the inductors L1 to L7 are connected in series. That is, the sum of the inductors connected in series changes when any of the switch elements is closed. The switch elements SWL1 to SWL8 are closed in order of the switch elements SWL1 to SWL8 when the input signal S11 changes from 0 V to a high voltage. The inductor circuit 110 includes the highly resistive element RL, which has a ground resistance with a relatively large resistance value (e.g., 10 kilo ohms). Thus, the inductors in the stages behind the switch element that is closed can be ignored. That is, when the switch element SWL8 is closed, the inductances of the inductors L1 to L7 can be ignored. The inductor circuit 110 outputs the impedance state corresponding to the open or closed states of the individual switch elements to the selection circuit 130 via a connection S12.

A configuration of the capacitor circuit 120 will be described. The capacitor circuit 120 includes the switch element SWC1, the switch element SWC2, the switch element SWC3, the switch element SWC4, the switch element SWC5, the switch element SWC6, the switch element SWC7, the switch element SWC8, a capacitor C1, a capacitor C2, a capacitor C3, a capacitor C4, a capacitor C5, a capacitor C6, a capacitor C7, and a highly resistive element RC. In the capacitor circuit 120, nodes N33 to N40 and the selection circuit 130 are electrically connected.

An input terminal of the switch element SWC1 is electrically connected to an output terminal of the comparator CM9. One end of an output terminal of the switch element SWC1 is electrically connected to the node N33. The node N33 is electrically connected to the reference potential via the highly resistive element RC and to the selection circuit 130 via the nodes N34 to N40. The other end of the output terminal of the switch element SWC1 is connected to the reference potential via the capacitor C1. The switch element SWC1 electrically connects the capacitor C1 and the selection circuit 130 when the switch element SWC1 is closed. The switch element SWC1 electrically separates the capacitor C1 and the selection circuit 130 when the switch element SWC1 is open. That is, when the switch element SWC1 is closed, the capacitance of the capacitor C1 is added to the impedance of the capacitor circuit 120.

An input terminal of the switch element SWC2 is electrically connected to an output terminal of the comparator CM10. One end of an output terminal of the switch element SWC2 is electrically connected to the node N34. The node N34 is electrically connected to the selection circuit 130 via the nodes N35 to N40. The other end of the output terminal of the switch element SWC2 is connected to the reference potential via the capacitor C2. The switch element SWC2 electrically connects the capacitor C2 and the selection circuit 130 when the switch element SWC2 is closed. The switch element SWC2 electrically separates the capacitor C2 and the selection circuit 130 when the switch element SWC2 is open. That is, when the switch element SWC2 is closed, the capacitance of the capacitor C2 is added to the impedance of the capacitor circuit 120.

An input terminal of the switch element SWC3 is electrically connected to an output terminal of the comparator CM11. One end of an output terminal of the switch element SWC3 is electrically connected to the node N35. The node N35 is electrically connected to the selection circuit 130 via the nodes N36 to N40. The other end of the output terminal of the switch element SWC3 is connected to the reference potential via the capacitor C3. The switch element SWC3 electrically connects the capacitor C3 and the selection circuit 130 when the switch element SWC3 is closed. The switch element SWC3 electrically separates the capacitor C3 and the selection circuit 130 when the switch element SWC3 is open. That is, when the switch element SWC3 is closed, the capacitance of the capacitor C3 is added to the impedance of the capacitor circuit 120.

An input terminal of the switch element SWC4 is electrically connected to an output terminal of the comparator CM12. One end of an output terminal of the switch element SWC4 is electrically connected to the node N36. The node N36 is electrically connected to the selection circuit 130 via the nodes N37 to N40. The other end of the output terminal of the switch element SWC4 is connected to the reference potential via the capacitor C4. The switch element SWC4 electrically connects the capacitor C4 and the selection circuit 130 when the switch element SWC4 is closed. The switch element SWC4 electrically separates the capacitor C4 and the selection circuit 130 when the switch element SWC4 is open. That is, when the switch element SWC4 is closed, the capacitance of the capacitor C4 is added to the impedance of the capacitor circuit 120.

An input terminal of the switch element SWC5 is electrically connected to an output terminal of the comparator CM13. One end of an output terminal of the switch element SWC5 is electrically connected to the node N37. The node N37 is electrically connected to the selection circuit 130 via the nodes N38 to N40. The other end of the output terminal of the switch element SWC5 is connected to the reference potential via the capacitor C5. The switch element SWC5 electrically connects the capacitor C5 and the selection circuit 130 when the switch element SWC5 is closed. The switch element SWC5 electrically separates the capacitor C5 and the selection circuit 130 when the switch element SWC5 is open. That is, when the switch element SWC5 is closed, the capacitance of the capacitor C5 is added to the impedance of the capacitor circuit 120.

An input terminal of the switch element SWC6 is electrically connected to an output terminal of the comparator CM14. One end of an output terminal of the switch element SWC6 is electrically connected to the node N38. The node N38 is electrically connected to the selection circuit 130 via the nodes N39 and N40. The other end of the output terminal of the switch element SWC6 is connected to the reference potential via the capacitor C6. The switch element SWC6 electrically connects the capacitor C6 and the selection circuit 130 when the switch element SWC6 is closed. The switch element SWC6 electrically separates the capacitor C6 and the selection circuit 130 when the switch element SWC6 is open. That is, when the switch element SWC6 is closed, the capacitance of the capacitor C6 is added to the impedance of the capacitor circuit 120.

An input terminal of the switch element SWC7 is electrically connected to an output terminal of the comparator CM15. One end of an output terminal of the switch element SWC7 is electrically connected to the node N39. The node N39 is electrically connected to the selection circuit 130 via the node N40. The other end of the output terminal of the switch element SWC7 is connected to the reference potential via the capacitor C7. The switch element SWC7 electrically connects the capacitor C7 and the selection circuit 130 when the switch element SWC7 is closed. The switch element SWC7 electrically separates the capacitor C7 and the selection circuit 130 when the switch element SWC7 is open. That is, when the switch element SWC7 is closed, the capacitance of the capacitor C7 is added to the impedance of the capacitor circuit 120.

An input terminal of the switch element SWC8 is electrically connected to an output terminal of the comparator CM16. One end of an output terminal of the switch element SWC8 is electrically connected to the node N40. The node N40 is electrically connected to the selection circuit 130. The other end of the output terminal of the switch element SWC2 is connected to the reference potential. The switch element SWC8 is configured to be electrically connected to the selection circuit 130 when the switch element SWC8 is closed. The switch element SWC2 is configured to be electrically separated from the selection circuit 130 when the switch element SWC2 is open.

In the capacitor circuit 120, the switch elements SWC1 to SWC7 are electrically connected to the capacitors C1 to C7, respectively, so that the sum of the capacitance changes when any of the switch elements is closed. The switch elements SWC1 to SWC8 are closed in order of the switch elements SWC1 to SWC8 when the input signal S11 changes from 0 V to a high voltage. The capacitor circuit 120 includes the highly resistive element RC, which has a ground resistance with a relatively large resistance value (for example, 10 kilo ohms). Thus, the respective capacitances can be ignored when all the switch elements are closed. That is, when the switch element SWC8 is closed, the capacitances of the capacitors C1 to C7 can be ignored. The capacitor circuit 120 outputs the impedance state corresponding to the open or closed states of the individual switch elements to the selection circuit 130 via a connection S13.

In the transmission circuit 28, the switch elements SWL1 to SWL8 of the inductor circuit 110 or the switch elements SWC1 to SWC8 of the capacitor circuit 120 can be controlled to become open or close in accordance with the output results of the comparators connected thereto.

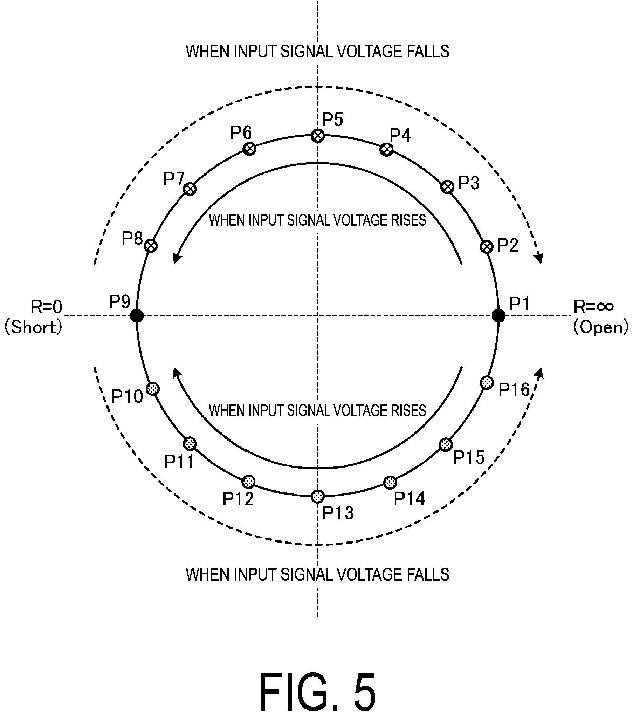

The operation of the transmission circuit according to the embodiment will be described with reference to FIG. 5. FIG. 5 is a diagram for explaining the operation of the transmission circuit according to the embodiment.

FIG. 5 illustrates positions of the reflection coefficient $\Gamma$ due to the impedance of the transmission circuit 28 according to the embodiment in polar coordinates (polar chart). FIG. 5 illustrates points P1 to P16 in the polar coordinates. The drive control circuit 29 controls the switch elements SWL1 to SWL8 and the switch elements SWC1 to SWC8 to position the impedance of the transmission circuit 28 at one of the phases at points P1 to P16.

In FIG. 5, the phase at point P1 is 0°. The phase at point P2 is 22.5°. The phase at point P3 is 45°. The phase at point P4 is 67.5°. The phase at point P5 is 90°. The phase at point P6 is 112.5°. The phase at point P7 is 135°. The phase at point P8 is 157.5°. The phase at point P9 is 180°. The phase at point P10 is 202.5°. The phase at point P11 is 225°. The phase at point P12 is 247.5°. The phase at point P13 is 270°. The phase at point P14 is 292.5°. The phase at point P15 is 315°. The phase at point P16 is 337.5°.

Point P1 indicates an impedance when all of the switch elements SWL1 to SWL8 and the switch elements SWC1 to SWC8 are open. In this case, the impedance of the transmission circuit 28 is, in principle, infinite. Point P9 indicates an impedance when all of the switch elements SWL1 to SWL8 and the switch elements SWC1 to SWC8 are closed. In this case, the impedance of the transmission circuit 28 is, in principle, 0.

The operation of the inductor circuit 110 will be described. When the voltage of the input signal S11 rises, that is, when the voltage value of the input signal S11 changes from 0 V (reference potential: GND) to a high voltage value, the switch elements SWL1 to SWL8 are switched from an open state to a closed state in this order. In this case, the impedance of the inductor circuit 110 changes counterclockwise in an upper semicircular region. For example, when the switch element SWL1 is closed, the impedance of the inductor circuit 110 changes to the phase at point P2. The impedance of the inductor circuit 110 at this time is a sum of the inductances of the inductors L1 to L7. For example, when the switch element SWL2 is closed, the impedance of the inductor circuit 110 changes to the phase at point P3. The impedance of the inductor circuit 110 at this time is a value obtained by subtracting the inductance of the inductor L2 from the sum of the inductances of the inductors L1 to L7. For example, when the switch elements SWL1 to SWL7 are closed, the impedance of the inductor circuit 110 changes to the phase at point P8. The impedance of the inductor circuit 110 at this time is a value obtained by subtracting the sum of the inductances of the inductors L2 to L7 from the sum of the inductances of the inductors L1 to L7, and thus is the value of the inductance of the inductor L1.

On the other hand, the impedance of the inductor circuit 110 changes clockwise in an upper semicircular region when the voltage of the input signal S11 falls, that is, when the input signal S11 changes from the high voltage value to 0 V (reference potential: GND). That is, the reverse operation is performed when the voltage value changes from 0 V (reference potential: GND) to the high voltage value.

The operation of the capacitor circuit 120 will be described. When the voltage of the input signal S11 rises, that is, when the voltage value of the input signal S11 changes from 0 V to a high voltage value, the switch elements SWC1 to SWC8 are switched from an open state to a closed state in this order. In this case, the impedance of the capacitor circuit 120 changes clockwise in the lower semicircular region. For example, when the switch element SWC1 is closed, the impedance of the capacitor circuit 120 changes to the phase at point P16. The impedance of the capacitor circuit 120 at this time is the value of the capacitance of the capacitor C1. For example, when the switch element SWC2 is closed, the impedance of the capacitor circuit 120 changes to the phase at point P15. The impedance of the capacitor circuit 120 at this time is a sum of the capacitances of the capacitors C1 and C2. For example, when the switch elements SWC1 to SWC7 are closed, the impedance of the capacitor circuit 120 changes to the phase at point P10. The impedance of the capacitor circuit 120 at this time is a sum of the capacitances of the capacitors C1 to C7.

On the other hand, the impedance of the capacitor circuit 120 changes counterclockwise in a lower semicircular region when the voltage of the input signal S11 falls, that is, when the input signal S11 changes from a high voltage value to 0 V. That is, the reverse operation is performed when the voltage value changes from 0 V to a high voltage value.

Referring back to FIG. 4, the operation of the selection circuit 130 will be described. The selection circuit 130 selects the connection S12 with the inductor circuit 110 when the input signal S11 rises to control the impedance counterclockwise, thereby suppressing the LSB signal and obtaining the USB SSB signal. The selection circuit 130 selects the connection S13 with the capacitor circuit 120 when the input signal S11 falls to control the impedance counterclockwise, thereby suppressing the LSB signal and obtaining the USB SSB signal.

In addition, the selection circuit 130 selects the connection S12 from the inductor circuit 110 when the input signal S11 falls to control the impedance clockwise, thereby suppressing the USB signal and obtaining the LSB SSB signal. The selection circuit 130 selects the connection S13 from the capacitor circuit to control the impedance clockwise when the input signal S11 rises, thereby suppressing the USB signal and obtaining the LSB SSB signal.

The selection circuit 130 receives a selection signal S14 from, for example, a control device such as an external computer. The selection signal S14 is a signal for selecting whether to obtain the USB SSB signal or the LSB SSB signal. The selection circuit 130 selects either the connection S12 or the connection S13 based on the input signal S11 and the selection signal S14.

Examples of Backscatter Operation

Examples of a backscatter operation will be described.

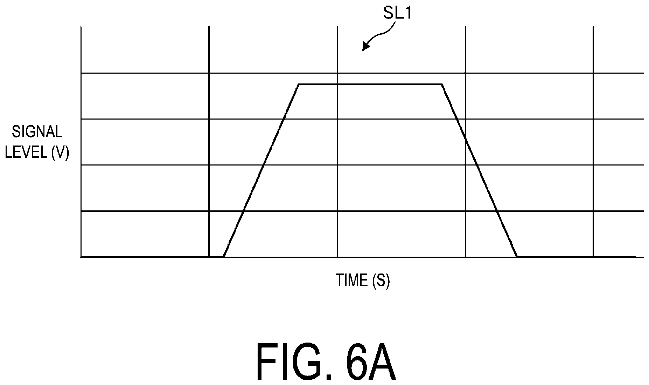

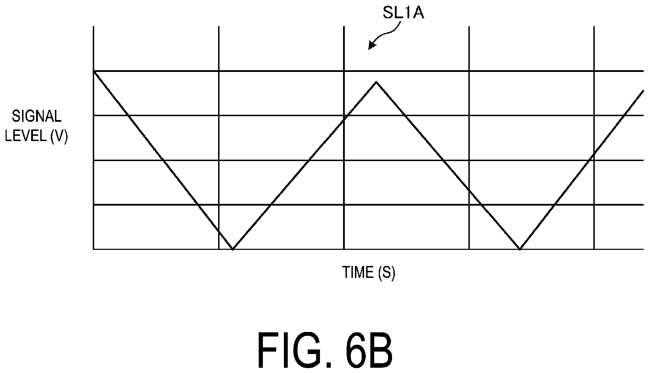

FIGs. 6A and 6B are diagrams illustrating examples of the input signal S11 according to the embodiment. FIG. 6A illustrates a trapezoidal wave SL1 as an example of the input signal S11. FIG. 6B illustrates a triangular wave SL1A as an example of the input signal S11. In the present embodiment, the input signal S11 with a waveform as illustrated in FIG. 6A or FIG. 6B is input, and the impedance is changed to rotate the reflection coefficient using a slope of the voltage at the rise or fall of the voltage. Examples of backscatter operation using the trapezoidal wave SL1 illustrated in FIG. 6A will be described below.

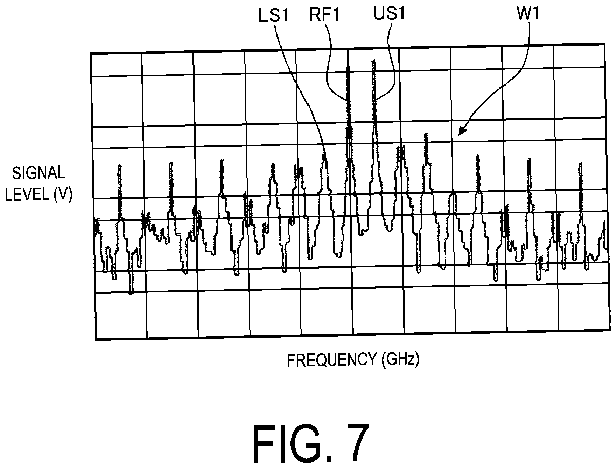

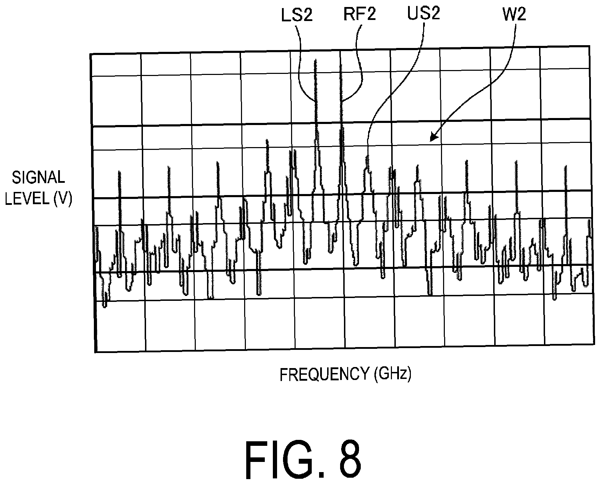

Examples of backscatter signals will be described with reference to FIGs. 7 and 8. FIGs. 7 and 8 are diagrams illustrating examples of spectrum waveforms of the backscatter signals according to the embodiment. In each of FIGs. 7 and 8, the horizontal axis represents time (seconds) and the vertical axis represents signal level (V).

As illustrated in FIG. 7, a spectrum waveform W1 includes a carrier signal RF1, an LSB signal LS1, and a USB signal US1. The spectrum waveform W1 illustrates an example of the USB signal US1 obtained by selecting the connection S12 using the slope at the rise of the trapezoidal wave SL1 or the connection S13 using the slope at the fall of the trapezoidal wave SL1. The frequency of the carrier signal RF1 is 1.0 GHz. The frequency of the LSB signal LS1 is 0.99 GHz. The frequency of the USB signal US1 is 1.01 GHz. As illustrated in FIG. 7, the LSB signal LS1 is suppressed compared with the USB signal US1. That is, in the spectrum waveform W1 illustrated in FIG. 7, the SSB is realized with the USB signal US1.

As illustrated in FIG. 8, a spectrum waveform W2 includes a carrier signal RF2, an LSB signal LS2, and a USB signal US2. The spectrum waveform W2 illustrates an example of the LSB signal LS2 obtained by selecting the connection S12 using the slope at the fall of the trapezoidal wave SL1 or the connection S13 using the slope at the rise of the trapezoidal wave SL1. The frequency of the carrier signal RF1 is 1.0 GHz. The frequency of the LSB signal LS1 is 0.99 GHz. The frequency of the USB signal US1 is 1.01 GHz. As illustrated in FIG. 8, the USB signal US2 is suppressed compared with the LSB signal LS2. That is, in the spectrum waveform W2 illustrated in FIG. 8, the SSB is realized with the LSB signal LS2.

The embodiment of the present disclosure has been described above, but the present disclosure is not limited by the contents of the embodiment. Constituent elements described above include those that can be easily assumed by a person skilled in the art, those that are substantially identical to the constituent elements, and those within a so-called range of equivalency. The constituent elements described above can be combined as appropriate. Various omissions, substitutions, or modifications of the constituent elements can be made without departing from the spirit of the above-described embodiment.

REFERENCE SIGNS

1 Wireless communication device
10 Antenna
11 BPF
20 RFBS device
21 Radio frequency switch

22 Amplifier
23 Demodulator
24 Oscillator
25, 26 LPF
27 Control circuit
28 Transmission circuit
29 Drive control circuit (control circuit)
30 Control device
40 Sensor
110 Inductor circuit
120 Capacitor circuit
SWL1 to SWL8, SWC1 to SWC8 Switch element
CM1 to CM16 Comparator

**Claims**

1. A combiner circuit comprising:

   a transmission circuit to be connected to an antenna; and
   a control circuit configured to control impedance of the transmission circuit, wherein
   the transmission circuit contains

      multiple impedance circuits, the multiple impedance circuits having different impedances from each other, and
      multiple first switch elements, each of the multiple first switch elements being connected to a corresponding one of the multiple impedance circuits, and

   the control circuit contains

      multiple comparators, each of the multiple comparators being connected to a corresponding one of the multiple first switch elements, and
      a voltage divider circuit comprising multiple resistive elements, each of the multiple resistive elements being configured to divide an input reference voltage and output a divided voltage power to a corresponding one of the multiple comparators.

2. The combiner circuit according to claim 1, wherein the voltage divider circuit is configured to control rotation of a reflection coefficient with the antenna around a reference point in a complex plane by changing the impedance of the transmission circuit.

3. The combiner circuit according to claim 2, wherein the reference point is the origin.

4. The combiner circuit according to claim 2, wherein the voltage divider circuit is configured to control rotation of the reflection coefficient around the reference point in the complex plane.

5. The combiner circuit according to any one of claims 1 to 4, wherein
the voltage divider circuit outputs divided voltages having different voltage values from each other to the multiple comparators, respectively.

6. The combiner circuit according to any one of claims 1 to 5, wherein
the voltage divider circuit outputs divided voltages to the multiple comparators, respectively, and closes at least one first switch element among the multiple first switch elements.

7. The combiner circuit according to any one of claims 1 to 6, wherein
each of the multiple comparators controls an open or closed state of each of the multiple first switch elements based on a comparison result between a divided voltage input from the voltage divider circuit and a predetermined input signal input from outside.

8. The combiner circuit according to any one of claims 1 to 7, wherein
the multiple impedance circuits contain multiple inductor circuits, each of the multiple inductor circuits being configured to adjust inductance of a reactance component of impedance.

9. The combiner circuit according to claim 8, wherein
the multiple inductor circuits have different impedances from each other.

10. The combiner circuit according to claim 8 or 9, wherein
at least one of the multiple inductor circuits contains multiple inductor elements.

11. The combiner circuit according to any one of claims 8 to 10, wherein
at least one of the multiple inductor circuits contains a resistive element.

12. The combiner circuit according to any one of claims 8 to 10, wherein
at least one of the multiple inductor circuits contains a capacitor element.

13. The combiner circuit according to any one of claims 1 to 12, wherein
the multiple impedance circuits contain multiple capacitor circuits, each of the multiple capacitor circuits being configured to adjust capacitance of a reactance component of impedance.

14. The combiner circuit according to claim 13, wherein
the multiple capacitor circuits have different impedances from each other.

15. The combiner circuit according to claim 13 or 14, wherein
at least one of the multiple capacitor circuits contains multiple capacitor elements.

16. The combiner circuit according to any one of claims 13 to 15, wherein
at least one of the multiple capacitor circuits contains a resistive element.

17. The combiner circuit according to any one of claims 13 to 15, wherein
at least one of the multiple capacitor circuits contains an inductor element.

# FIG. 1

FIG. 2

# FIG. 3A

# FIG. 3B

# FIG. 3C

FIG. 4

EP 4 224 726 A1

WHEN INPUT SIGNAL VOLTAGE FALLS

WHEN INPUT SIGNAL VOLTAGE RISES

WHEN INPUT SIGNAL VOLTAGE RISES

WHEN INPUT SIGNAL VOLTAGE FALLS

P5
P6
P4
P7
P3
P8
P2
R=0 (Short)
P9
P1
R=∞ (Open)
P10
P16
P11
P15
P12
P14
P13

# FIG. 5

SL1

SIGNAL
LEVEL (V)

TIME (S)

# FIG. 6A

FIG. 6B

FIG. 7

FIG. 8

## INTERNATIONAL SEARCH REPORT

| International application No. |
|---|
| **PCT/JP2021/030861** |

**A. CLASSIFICATION OF SUBJECT MATTER**

*H04B 5/02*(2006.01)i; *H04B 1/59*(2006.01)i
FI:  H04B5/02; H04B1/59

According to International Patent Classification (IPC) or to both national classification and IPC

**B. FIELDS SEARCHED**

Minimum documentation searched (classification system followed by classification symbols)

H04B5/02; H04B1/59

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-202721 A (MATSUSHITA ELECTRIC INDUSTRIAL CO., LTD.) 28 July 2005 (2005-07-28) fig. 2 | 1, 5, 6 |
| A | entire text, all drawings | 2-4, 7-17 |
| A | JP 2009-232372 A (SONY CORP.) 08 October 2009 (2009-10-08) entire text, all drawings | 1-17 |
| A | US 2018/0365549 A1 (INTERMEC, INC.) 20 December 2018 (2018-12-20) entire text, all drawings | 1-17 |
| A | EP 2330538 A1 (NXP B.V.) 30 November 2009 (2009-11-30) entire text, all drawings | 1-17 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 November 2021** | **22 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

**Information on patent family members**

International application No.

**PCT/JP2021/030861**

| Patent document cited in search report | | | Publication date (day/month/year) | Patent family member(s) | | | Publication date (day/month/year) |
|---|---|---|---|---|---|---|---|
| JP | 2005-202721 | A | 28 July 2005 | (Family: none) | | | |
| JP | 2009-232372 | A | 08 October 2009 | US | 2009/0243804 | A1 | |
| | | | | entire text, all drawings | | | |
| | | | | EP | 2105861 | A1 | |
| | | | | CN | 101546370 | A | |
| US | 2018/0365549 | A1 | 20 December 2018 | EP | 3416088 | A1 | |
| | | | | entire text, all drawings | | | |
| EP | 2330538 | A1 | 30 November 2009 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005323223 A